# EUROPEAN PATENT SPECIFICATION

(11) **EP 4 385 603 B1**
(45) Date of publication and mention of the grant of the patent: **04.06.2025**
(21) Application number: 23207216.5
(22) Date of filing: 31.10.2023
(51) Int. Cl.: B01D 29/00, D06F 39/10

(54) **A HOUSEHOLD APPLIANCE COMPRISING A FILTERING MEMBER**
HAUSHALTSGERÄT MIT EINEM FILTERELEMENT
APPAREIL ÉLECTROMÉNAGER COMPRENANT UN ÉLÉMENT FILTRANT

(30) Priority: 16.12.2022 TR 202219506
(43) Date of publication of application: 19.06.2024
(73) Proprietor: Arçelik Anonim Sirketi, 34445 Istanbul (TR)
(72) Inventor: ATAY, MEHMET CEMAL, 34445 ISTANBUL (TR); TARKUC, SIMGE, 34445 ISTANBUL (TR); KARTAL, RESUL, 34445 ISTANBUL (TR); YESILCUBUK, ALPER, 34445 ISTANBUL (TR); KAYISDAG, VAROL, 34445 ISTANBUL (TR)

(56) References cited:
- EP-A2- 2 816 150
- CN-A- 105 833 584
- DE-A1- 1 809 755
- DE-A1- 102020 207 163
- US-A1- 2010 187 190

## Description

The present invention relates to a household appliance wherein the filter use and/or cleaning time is increased.

In household appliances, especially in the washing machine or the laundry washing/drying machines, microfibers which pass from the laundry to water during the washing, rinsing, spin-drying or drying steps should be filtered from the discharge water independently of the user, without changing the washing/drying performance of the machine. The amount of microfiber passing from the laundry into water/air varies depending on the type of laundry (cotton, linen, wool, synthetic, etc.), degree of use of the laundry (new, worn, slightly worn), type of detergent used (powder, liquid), loading type of the washing machine (from the top, from the front), and washing program (temperature, cycle). The amount and size of microfibers which pass into the water during the washing process also vary.

Today, this process is done using various filtering methods (dead-end, crossflow). Especially, with the dead-end filtering method, the embodiments comprising reusable filter cartridges or disposable filter cartridges are used. In these embodiments, filtering members (filter mesh) with different pore openings suitable to the size of the solid waste intended to be filtered are selected. In addition to the size of the solid waste, filter design is carried out by taking into account values such as pressure, flux, and target filtering performance. Fibers from laundry, detergent residues, dirt and similar waste accumulate on the surface of the filter cartridges. As the amount of accumulated waste increases, the active filtering surface area decreases, and the time required for the filtering process increases, the flux decreases, and after reaching a certain level of waste accumulation, the filtering process completely stops and filtering cannot be performed since the filter is full.

In the state of the art embodiments, the economic life of the filter is extended without losing its filtering performance by using a graduated filter. However, these embodiments cannot be widely used due to reasons such as difficulties in cleaning the filter effectively, high volume requirement, manufacturability, and cost.

If the filter active surface becomes clogged due to the amount of waste accumulated thereon, the internal volume of the filter cartridge is not completely filled with solid waste. Even if the filter surface is covered with waste, the inside of the cartridge is not filled. Since filtering cannot be performed in this embodiment, the filter cartridge is required to be cleaned or replaced. If it is required to clean a filter cartridge with full active surface area, the user should clean the filter frequently. When using a disposable filter, the filter with the surface being filled with a small amount of solid waste should be disposed.

In the state of the art European Patent Application No. EP3842586, a washing machine is disclosed, comprising a hollow chamber which is provided on the circulation line, and at least one filter which is detachably disposed in the chamber and which filters the washing liquid such that the washing liquid is at least partially cleansed of wastes such as fiber, lint, etc.

In the state of the art United States Patent No. US5531891, a filter is disclosed, which is disposed at the outlet of the washing machine and which filters the fiber and lint breaking off the laundry EP 2 816 150 A2, CN 105 833 584 A, DE 18 09 755 A1, DE 10 2020 207163 A1 and US 2010/187190 A1 show other filter devices.

The aim of the present invention is the realization of a household appliance with improved filtering performance.

The household appliance realized in order to attain the aim of the present invention, explicated in the first claim and the respective claims thereof, comprises a main discharge line; a circulation line; and a filtering member having a casing which is disposed between the main discharge line and the circulation line, an inlet which is provided on the wall of the casing connected to the main discharge line and which receives the discharged water, a first chamber into which the inlet opens in the casing, a second chamber which is disposed under the first chamber, a filter which is disposed between the first chamber and the second chamber, a first outlet which is provided on the first chamber and which is positioned opposite to the inlet, and a second outlet which is provided on the second chamber and which is positioned at the same vertical plane as the inlet.

The filtering member comprises the first chamber which is supplied with water containing solid waste, and the second chamber which is filled with water almost completely cleansed of solid waste. The filter between the first chamber and the second chamber provides that at least some of the solid waste in the water filling the first chamber remains in the first chamber. The solid waste remaining in the first chamber is discharged through the first outlet together with some water. In this case, the water at least partially cleansed of solid waste passes into the second chamber. Some of the water containing solid waste, which is supplied through the inlet to the filtering member with a certain flow rate, flows through the first chamber and leaves the casing and hence the filtering member through the first outlet. At the same time, some of the water passing through the first chamber is directed to the second chamber and leaves the filtering member through the second outlet.

In the embodiment of the present invention, the casing is in the form of a quadrangular prism. In another embodiment of the present invention, the casing is cylindrical.

In another embodiment of the present invention, the water passing through the first chamber is delivered to the discharge line through the first outlet.

According to the invention, the surface of the filter comprises spikes which are inclined against the direction of water flow. Depending on their geometry, distance therebetween and length, the spikes create a vortex effect in the water flowing in the first chamber and direct the water thanks to this effect. In the casing due to the vortex effect, there are particles retained by the filter in the first chamber and solid waste which passes into the second chamber without being affected by this vortex. The water full of solid waste particles leaves the filtering member through the first outlet.

In the preferred embodiment of the present invention, the efficiency of the filter spikes is increased by changing the geometry, length, width, material, angle and surface morphology (roughness). The distance between the consecutive spikes also affects the filtering performance.

In another embodiment of the present invention, the filter spikes work actively or passively. In the active state, the spikes are directed by applying or moving an electric field, magnetic field. Thus, the filtering performance is improved by changing both the position of the spikes and the water flow profile. The position of the spikes relative to each other also affects the filtering performance. The filtering performance is controlled by changing the water flow with parallel or diagonal arrangement. In addition, the filtering performance is changed by changing the number of rows and spacing of the spikes.

In an embodiment of the present invention, the household appliance comprises a second filtering member to which the first outlet is connected.

In another embodiment of the present invention, the household appliance comprises at least two filtering members which are connected to each other successively. In this embodiment of the present invention, the first outlet of the first filtering member connected to the discharge line is connected to the inlet of the second filtering member. In this embodiment, the water full of solid waste passing through the first chamber is supplied to the second filtering member.

In another embodiment of the present invention, the water in the second chamber, which is poor in terms of solid waste, is delivered to the circulation line of the household appliance by means of the second outlet and enters the washing and/or drying cycle or is discharged through the circulation line.

In an embodiment of the present invention, the performance of the filtering member is adjusted by changing the volumes of the first and second chambers. In an embodiment of the present invention, the volumes of the first chamber and the second chamber are equal to each other. In another embodiment of the present invention, the volume of the first chamber is smaller than the volume of the second chamber. In yet another embodiment of the present invention, the volume of the first chamber is larger than the volume of the second chamber.

In another embodiment of the present invention, the performance of the filtering member is adjusted by changing the diameters of the inlet, the first outlet and the second outlet. In the preferred embodiment of the present invention, the diameter of the inlet is equal to the diameters of the first and second outlets.

In an embodiment of the present invention, the household appliance is a washing machine. In another embodiment of the present invention, the household appliance is a laundry dryer. In another embodiment of the present invention, the household appliance is a laundry washer/dryer.

By means of the present invention, microfibers and other solid wastes breaking off from the laundry during the washing or drying process are filtered and directly discharged or entered into circulation. Moreover, by means of the present invention, microfiber and similar solid waste retention capacity is increased and the filter usage time and/or cleaning time is extended.

A household appliance realized in order to attain the aim of the present invention is illustrated in the attached figures, where:
Figure 1 - is the cross-sectional view of a filtering member.
Figure 2 - is the view of the detail A of Figure 1.

The elements illustrated in the figures are numbered as follows:
1. Filtering member
2. Casing
3. Inlet
4. First outlet
5. Second outlet
6. First chamber
7. Second chamber
8. Filter
9. Spike

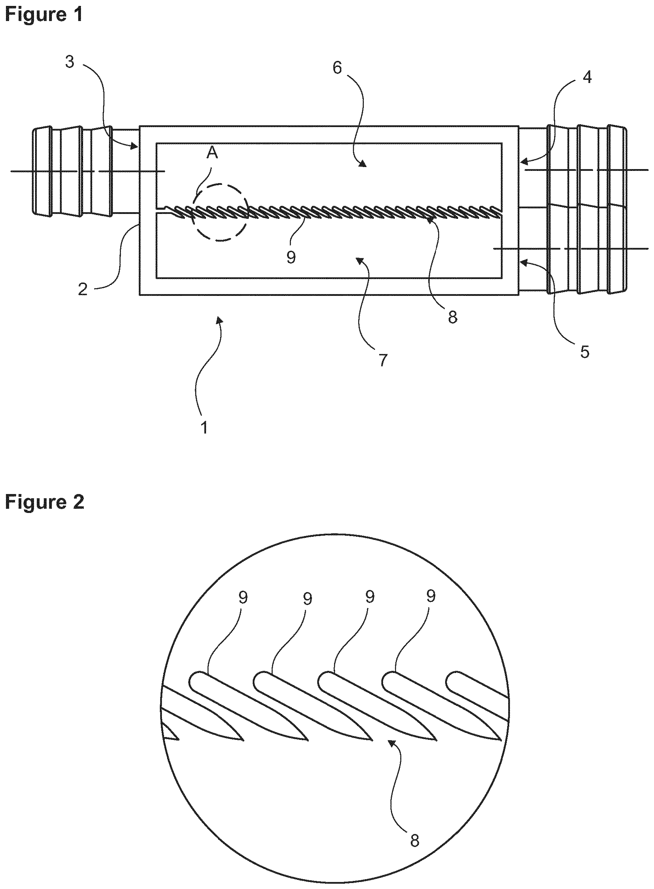

The household appliance comprises a main discharge line; a circulation line; and a filtering member (1) having a casing (2) which is disposed between the main discharge line and the circulation line, an inlet (3) which is provided on the wall of the casing (2) connected to the main discharge line and which receives the discharged water, a first chamber (6) into which the inlet (3) opens in the casing (2), a second chamber (7) which is disposed under the first chamber (6), a filter (8) which is disposed between the first chamber (6) and the second chamber (7), a first outlet (4) which is provided on the first chamber (6) and which is positioned opposite to the inlet (3), and a second outlet (5) which is provided on the second chamber (7) and which is positioned at the same vertical plane as the inlet (3) (Figure 1).

The filtering member (1) comprises the first chamber (6) which is supplied with water containing solid waste, and the second chamber (7) which is filled with water almost completely cleansed of solid waste. The filter (8) between the first chamber (6) and the second chamber (7) separates the first chamber (6) and the second chamber (7) from each other. Some of the water containing solid waste, which is supplied through the inlet (3) to the filtering member (1) with a certain flow rate, flows through the first chamber (6) and leaves the casing (2) and hence the filtering member (1) through the first outlet (4). At the same time, some of the water passing through the first chamber fills into the second chamber (7). By means of the filter (8) provided between the first chamber (6) and the second chamber (7), it is ensured that a relatively higher amount of solid particles in the water taken through the inlet (3) remains in the first chamber (6). Thus, while the water containing relatively more solid particles in the first chamber (6) is discharged through the first outlet (4), the water containing relatively fewer solid particles in the second chamber (7) is discharged through the second outlet (5).

In the embodiment of the present invention, the casing (2) is in the form of a quadrangular prism. In another embodiment of the present invention, the casing (2) is cylindrical.

In another embodiment of the present invention, the water passing through the first chamber (6) is delivered to the discharge line through the first outlet (4).

According to the invention, the filtering member (1) comprises spikes (9) on the surface of the filter (8), which are inclined against the direction of water flow. Depending on their geometry, distance therebetween and length, the spikes (9) create a vortex effect in the water flowing in the first chamber (6) and direct the water thanks to this effect. In the casing (2) due to the vortex effect, there are particles retained by the filter (8) in the first chamber (6) and solid waste which passes into the second chamber (7) without being affected by this vortex. The water full of solid waste particles leaves the filtering member (1) through the first outlet (4) (Figure 2).

In the preferred embodiment of the present invention, the efficiency of the filter (8) spikes (9) is increased by changing the geometry, length, width, material, angle and surface morphology (roughness). The distance between the consecutive spikes (9) also affects the filtering performance.

In another embodiment of the present invention, the filter (8) spikes (9) work actively or passively. In the active state, the spikes (9) are directed by applying or moving an electric field, magnetic field. Thus, the filtering performance is improved by changing both the position of the spikes (9) and the water flow profile. The position of the spikes (9) relative to each other also affects the filtering performance. The filtering performance is controlled by changing the water flow with parallel or diagonal arrangement. In addition, the filtering performance is changed by changing the number of rows and spacing of the spikes (9).

In an embodiment of the present invention, the household appliance comprises a second filtering member (1) to which the first outlet (4) is connected.

In another embodiment of the present invention, the household appliance comprises at least two filtering members (1) which are connected to each other successively. In this embodiment of the present invention, the first outlet (4) of the first filtering member (1) connected to the discharge line is connected to the inlet (3) of the second filtering member (1). In this embodiment, the water full of solid waste passing through the first chamber (6) is supplied to the second filtering member (1).

In another embodiment of the present invention, the water in the second chamber (7), which is poor in terms of solid waste, is delivered to the circulation line of the household appliance by means of the second outlet (5) and enters the washing and/or drying cycle or is discharged through the circulation line.

In another embodiment of the present invention, the water in the second chamber (7), which is poor in terms of solid waste, is delivered to a solid waste filter, which retains solid waste, through the second outlet (5). The solid waste filter, which is preferably a mesh filter, ensures that the water is cleansed of solid waste before being discharged from the household appliance. When filled with solid waste, the solid waste filter can be cleaned by the user or replaced with a new one. Thus, solid waste is prevented from being delivered to the wastewater network by keeping the same in a separate solid waste filter on the household appliance.

In an embodiment of the present invention, the performance of the filtering member (1) is adjusted by changing the volumes of the first and second chambers (6 and 7). In an embodiment of the present invention, the volumes of the first chamber (6) and the second chamber (7) are equal to each other. In another embodiment of the present invention, the volume of the first chamber (6) is smaller than the volume of the second chamber (7). In yet another embodiment of the present invention, the volume of the first chamber (6) is larger than the volume of the second chamber (7).

In another embodiment of the present invention, the performance of the filtering member (1) is adjusted by changing the diameters of the inlet (3), the first outlet (4)and the second outlet (5). In the preferred embodiment of the present invention, the diameter of the inlet (3) is equal to the diameters of the first and second outlets (4 and 5).

In an embodiment of the present invention, the household appliance is a washing machine. In another embodiment of the present invention, the household appliance is a laundry dryer. In another embodiment of the present invention, the household appliance is a laundry washer/dryer.

By means of the present invention, microfibers and other solid wastes breaking off from the laundry during the washing or drying process are filtered and directly discharged or entered into circulation. Moreover, by means of the present invention, microfiber and similar solid waste retention capacity is increased and the filter usage time and/or cleaning time is extended.

## Claims

1. A household appliance **comprising** a main discharge line and a circulation line, and a filtering member (1) having a casing (2) which is disposed between the main discharge line and the circulation line, an inlet (3) which is provided on the wall of the casing (2) connected to the main discharge line and which receives the discharged water, a first chamber (6) into which the inlet (3) opens in the casing (2), a second chamber (7) which is disposed under the first chamber (6), a filter (8) which is disposed between the first chamber (6) and the second chamber (7), a first outlet (4) which is provided on the first chamber (6) and which is positioned opposite to the inlet (3), and a second outlet (5) which is provided on the second chamber (7) and which is positioned at the same vertical plane as the inlet (3) **characterized by** the filtering member (1) comprising spikes (9) on the surface of the filter (8), each having a rounded edge and a sharp edge, and inclined against the direction of water flow such that the rounded edges face the first chamber (6) and the sharp edges face the second chamber (7).

2. A household appliance as in Claim 1, **characterized by** the casing (2) which is a quadrangular prism.

3. A household appliance as in Claim 1, **characterized by** the casing (2) which is cylindrical.

4. A household appliance as in any one of the above claims, **characterized by** a second filtering member (1) to which the first outlet (4) is connected.

5. A household appliance as in any one of Claims 1 to 4, **characterized by** at least two filtering members (1) which are connected to each other successively.

6. A household appliance as Claim 5, **characterized by** the second filtering member (1) to the inlet (3) of which the first outlet (4) of the first filtering member (1) connected to the discharge line is connected.

7. A household appliance as in any one of Claims 1 to 3, **characterized by** a solid waste filter to which the first outlet (4) is connected.

8. A household appliance as in any one of the above claims, **characterized by** the first chamber (6) and the second chamber (7) which have the same volume.

9. A household appliance as in any one of the above claims, **characterized by** the inlet (3), the first outlet (4) and the second outlet (5) which have the same diameter.

10. A household appliance as in any one of the above claims **characterized by** being a washing machine.

11. A household appliance as in any one of Claims 1 to 9, **characterized by** being a laundry dryer.

12. A household appliance as in any one of Claims 1 to 9, **characterized by** being a laundry washer/dryer.

## Patentansprüche

1. Ein Haushaltsgerät umfasst eine Hauptauslassleitung und eine Zirkulationsleitung, und einem Filterelement (1) mit einem Gehäuse (2), das zwischen der Hauptauslassleitung und der Zirkulationsleitung angeordnet ist, einem Einlass (3), der an der Wand des Gehäuses (2) vorgesehen ist, der mit der Hauptauslassleitung verbunden ist und der das ausgelassene Wasser aufnimmt, eine erste Kammer (6), in die der Einlass (3) im Gehäuse (2) mündet, eine zweite Kammer (7), die unter der ersten Kammer (6) angeordnet ist, einen Filter (8), der zwischen der ersten Kammer (6) und der zweiten Kammer (7) angeordnet ist, einen ersten Auslass (4), der an der ersten Kammer (6) vorgesehen und gegenüber dem Einlass (3) angeordnet ist, und einen zweiten Auslass (5), der an der zweiten Kammer (7) vorgesehen und in derselben vertikalen Ebene wie der Einlass (3) angeordnet ist, **ist dadurch gekennzeichnet, dass** ein Filterelement (1) mit Zacken (9) auf der Oberfläche des Filters (8), die jeweils eine abgerundete Kante und eine scharfe Kante aufweisen und gegen die Wasserströmungsrichtung geneigt sind, so dass die abgerundeten Kanten der ersten Kammer (6) und die scharfen Kanten der zweiten Kammer (7) zugewandt sind.

2. Ein Haushaltsgerät, wie in Anspruch 1 aufgeführt, ist **dadurch gekennzeichnet, dass** das Gehäuse (2) ein viereckiges Prisma ist.

3. Ein Haushaltsgerät, wie in Anspruch 1 aufgeführt, **ist dadurch gekennzeichnet, dass** das Gehäuse (2) ein zylindrisch ist.

4. Ein Haushaltsgerät, wie in einem der vorherigen Ansprüchen aufgeführt, **ist dadurch gekennzeichnet, dass** ein zweites Filterelement (1) mit dem ersten Auslass (4) verbunden ist.

5. Ein Haushaltsgerät, wie in einem de Ansprüche 1 bis 4 aufgeführt, **ist dadurch gekennzeichnet, dass** mindestens zwei Filterelemente (1) nacheinander miteinander verbunden sind.

6. Ein Haushaltsgerät, wie in Anspruch 5 aufgeführt, **ist dadurch gekennzeichnet, dass** das zweite Filterelement (1) mit dem Einlass (3) verbunden ist, an den der erste Auslass (4) des ersten Filterelements (1), der mit der Abflussleitung verbunden ist, angeschlossen ist.

7. Ein Haushaltsgerät, wie in einem der Ansprüche 1 bis 3 aufgeführt, **ist dadurch gekennzeichnet, dass** ein Feststofffilter, an dessen der erste Auslass (4) angeschlossen ist.

8. Ein Haushaltsgerät, wie in einem der vorherigen Ansprüchen aufgeführt, **ist dadurch gekennzeichnet, dass** die erste Kammer (6) und die zweite Kammer (7) das gleiche Volumen haben.

9. Ein Haushaltsgerät, wie in einem der vorherigen Ansprüchen aufgeführt, **ist dadurch gekennzeichnet, dass** der Einlass (3), der erste Auslass (4) und der zweite Auslass (5) den gleichen Durchmesser aufweisen.

10. Ein Haushaltsgerät, wie in einem der vorherigen Ansprüchen aufgeführt, **ist dadurch gekennzeichnet, dass** es sich um eine Waschmaschine handelt.

11. Ein Haushaltsgerät, wie in einem der Ansprüche 1 bis 9 aufgeführt, **ist dadurch gekennzeichnet, dass** es sich um einen Wäschetrockner handelt.

12. Ein Haushaltsgerät, wie in einem der Ansprüche 1 bis 9 aufgeführt, **ist dadurch gekennzeichnet, dass** es sich um eine Waschmaschine/einen Trockner handelt.

## Revendications

1. Un appareil électroménager **comprenant** une conduite d'évacuation principale et une conduite de circulation, et un élément de filtration (1) comportant un boîtier (2) qui est disposé entre la conduite d'évacuation principale et la conduite de circulation, une entrée (3) qui est aménagée sur la paroi du boîtier (2) reliée à la conduite d'évacuation principale et qui reçoit l'eau évacuée, une première chambre (6) dans laquelle débouche l'entrée (3) à l'intérieur du boîtier (2), une seconde chambre (7) qui est disposée sous la première chambre (6), un filtre (8) qui est disposé entre la première chambre (6) et la seconde chambre (7), une première sortie (4) qui est prévue sur la première chambre (6) et qui est positionnée à l'opposé de l'entrée (3), et une seconde sortie (5) qui est prévue sur la seconde chambre (7) et qui est positionnée dans le même plan vertical que l'entrée (3) **caractérisé par** l'élément de filtration (1) comprenant des pointes (9) sur la surface du filtre (8), chacune possédant un bord arrondi et un bord tranchant, et étant inclinées dans le sens opposé à l'écoulement de l'eau de manière à ce que les bords arrondis font face à la première chambre (6) et les bords tranchants font face à la seconde chambre (7).

2. Un appareil électroménager selon la Revendication 1, **caractérisé par** le boîtier (2) qui est un prisme quadrangulaire.

3. Un appareil électroménager selon la Revendication 1, **caractérisé par** le boîtier (2) qui est cylindrique.

4. Un appareil électroménager selon l'une quelconque des revendications précédentes, **caractérisé par** un second élément de filtration (1) auquel est reliée la première sortie (4).

5. Un appareil électroménager selon l'une quelconque des Revendications 1 à 4, **caractérisé par** au moins deux éléments de filtration (1) qui sont reliés successivement l'un à l'autre.

6. Un appareil électroménager selon la Revendication 5, **caractérisé par** le second élément de filtration (1) qui est relié au niveau de son entrée (3) à la première sortie (4) du premier élément de filtration (1) connecté à la conduite d'évacuation.

7. Un appareil électroménager selon l'une quelconque des Revendications 1 à 3, **caractérisé par** un filtre à déchets solides auquel est reliée la première sortie (4).

8. Un appareil électroménager selon l'une quelconque des revendications précédentes, **caractérisé par** la première chambre (6) et la seconde chambre (7) qui ont le même volume.

9. Un appareil électroménager selon l'une quelconque des revendications précédentes, **caractérisé par** l'entrée (3), la première sortie (4) et la seconde sortie (5) qui ont le même diamètre.

10. Un appareil électroménager tel que décrit dans l'une quelconque des revendications précédentes, **caractérisé en ce qu'**il s'agit d'une machine à laver.

11. Un appareil électroménager selon l'une quelconque des Revendications 1 à 9, **caractérisé en ce qu'**il s'agit d'un sèche-linge.

12. Un appareil électroménager selon l'une des Revendications 1 à 9, **caractérisé en ce qu'**il s'agit d'un lave-linge/sèche-linge.
